# EUROPEAN PATENT SPECIFICATION

(11) **EP 3 387 895 B1**
(45) Date of publication and mention of the grant of the patent: **07.06.2023**
(21) Application number: 18167325.2
(22) Date of filing: 13.04.2018
(51) Int. Cl.: A01G 18/20

(54) **METHOD FOR PROCESSING MYCELIUM COLONIZED PHASE 3 MUSHROOM COMPOST FOR GROWING MUSHROOMS**
VERFAHREN ZUR VERARBEITUNG VON MIT MYCELIUM BESIEDELTEM PILZKOMPOST DER PHASE 3 FÜR DIE PILZZUCHT
PROCEDE DE TRAITEMENT DU COMPOST DE CHAMPIGNONS PHASE 3 COLONISE PAR DU MYCELIUM POUR LA CULTURE DE CHAMPIGNONS

(30) Priority: 13.04.2017 NL 2018703
(43) Date of publication of application: 17.10.2018
(73) Proprietor: CNC Grondstoffen BV, 6596 MA Milsbeek (NL)
(72) Inventor: VAN IPEREN, Antonius Martinus Gijsbertus, 6596 MA Milsbeek (NL); ROKS, Johannes Cornelis Hendrika Adrianus, 6596 MA Milsbeek (NL); POSTMA, Pieter Richard, 6596 MA Milsbeek (NL)
(74) Representative: De Vries & Metman

(56) References cited:
- EP-A1- 2 455 357
- MAOGUI WEI ET AL: "NIR hyperspectral imaging and multivariate image analysis to characterize spent mushroom substrate: a preliminary study", ANALYTICAL AND BIOANALYTICAL CHEMISTRY, vol. 409, no. 9, 23 January 2017 (2017-01-23), pages 2449-2460, XP055425020, DE ISSN: 1618-2642, DOI: 10.1007/s00216-017-0192-2
- UNKNOWN: "Application Note - Mushroom Compost", ANASPEC solutions , 4 April 2012 (2012-04-04), XP002775640, Retrieved from the Internet: URL:https://www.anaspec.nl/media/applicati es_ftnir/Application%20note%20-%20compost- %20rev%201-4%20April%202012.pdf [retrieved on 2017-11-14]

## Description

The present disclosure relates to a method for processing mycelium colonized phase 3 mushroom compost for growing mushrooms.

Substrates for mushroom cultivation are composed and prepared to optimize mushroom yield. The composition of the substrate depends on the type of mushroom. Shiitake, for example, is usually grown on substrates based on sawdust, while champignon mushrooms (mushrooms of the Agaricus bisporus fungus) are grown on mushroom compost, typically composed of horse manure, poultry manure, gypsum and straw.

The following consecutive phases can be distinguished in the process of preparing and conditioning mushroom compost:
After mixing the ingredients for mushroom compost, the compost is stored in aerated bunkers or tunnels for about 3 - 6 days. The temperature rises to about 80°C due to the bio-activity of micro-organisms. This is so-called phase 1 compost.

In phase 2, the compost is transferred to tunnels, where the compost is pasteurized and conditioned at elevated temperatures.

After conditioning the compost it is cooled and inoculated by spawn, typically mycelium grown on rye grain. This process normally lasts about 15 - 17 days. The resulting mycelium colonized compost is generally called phase 3 compost.

After phase 3 the compost is distributed to the mushroom farms, where a casing layer is applied over the compost beds and the mushrooms are allowed to grow (phase 4). The casing layer typically contains a mixture of peat, marl and sugar factory lime.

The quality of the ingredients for the mushroom substrate varies per batch and also the effectiveness of the pasteurizing and conditioning steps may result in quality variations of the phase 2 compost.

A common problem occurring in phase 3 is the growth of green mould or ascomycete (Trichoderma aggressivum). The presence of green mould in mushroom compost substantially reduces mushroom yields. Hitherto, phase 3 compost is checked visually by an operator. This is not very accurate and reliable and only allows detection of green mould in a late stage, usually after the compost has been delivered to the farmer.

Due to these quality variations of the substrate ingredients and the substrate mixtures the yield at the mushroom farm varies and cannot be predicted accurately.

It is an object of the invention to improve yield of growing mushroom.

The object of the invention is achieved by a method according to claim 1. This way, quality variations, contaminations a, e.g., by other fungi, can be detected in a very early stage and the condition process and/or the substrate composition can be adjusted in a much earlier stage.

In this respect it is noted that EP 2 455 357 A1 discloses using dynamic image analysis to determine particle size distribution of waste mushroom compost. Content analysis of spent mushroom substrate is disclosed in the article *"*NIR hyperspectral imaging and multivariate image analysis to characterize spent mushroom substrate: a preliminary study, M. Wei c.s., Analytical and Bioanalytical Chemistry, vol. 409 no. 9, p. 2449 - 2460.

Anaspec Solutions also discloses a method for analysing mushroom compost with a FT-NIR analyser, as described in the webpage https://www.anaspec.nl/media/applicaties_ftnir/Application%20note%20-%20compost-%20rev%201-4%20April%202012.pdf.

In the present invention, imaging can for example be done using spectral imaging techniques, such as multi-spectral or hyperspectral imaging. Spectral imaging involves collecting and processing data from across the electromagnetic spectrum in order to obtain the spectrum for each pixel in the image of a surface. Imaging can take place by scanning (e.g., using a line scan camera or a push broom scanner), or by generating an instant image (snapshot imaging).

Spectral imaging divides the electromagnetic spectrum into spectral ranges or bands. In hyperspectral imaging, the recorded spectra have a fine wavelength resolution. A wide range of wavelengths may be covered in the visible, UV, IR and/or near-IR parts of the spectrum.

In hyperspectral imaging, hyperspectral sensors collect data as a set of images. Each image represents a narrow band or wavelength range of the electromagnetic spectrum. The set of images of a given surface forms a three-dimensional hyperspectral data cube (x,y,λ), with x and y being spatial dimensions and λ being the wavelength parameter.

Scanning can take place by spatial scanning, spectral scanning or spatio-spectral scanning. In spatial scanning, each sensor output represents a full slit spectrum (x,λ). In spectral scanning, the sensor output represents a monochromatic spatial (x,y) map of the imaged surface. In spatio-spectral scanning, the sensor output represents a spatial (x,y) map of the imaged surface. A suitable sensor for line-scanning is for instance the line-scan camera Basler^{®} raL2048-48gm available from Basler, Germany, making monochromatic single wavelength images.

Instead of scanning, snapshot imaging can be used. With snapshot imaging, the sensor output contains all spatial (x,y) and spectral (λ) data.

The sensor provides monochromatic images of the imaged area for each incremental band of wavelengths. The width of each incremental band may for example be at least Δλ = 0,5 nm, e.g., at most 2 nm, e.g., of about Δλ = 1 nm. The range of bands may jointly span the complete scanned spectrum, e.g., of 200 - 3000 nm. For examining the moisture content of the substrate material, IR-wavelengths of 1400 - 2000 nm are particularly suitable.

The spectral data cubes can for instance be compared to spectral data cubes to reference spectral data cubes, e.g., by means of a programmable data processing unit using suitable software. A suitable example of such software is Halcon^{®} commercially available from Demcon Focal BV in Enschede, the Netherlands.

The data cubes contain spectral data of light reflected by any scanned point (x, y) of the scanned area for each (x,y,λ) point in the data cube. The reading software may for example convert these spectral data into reflection expressed as a percentage of reflection by pure white. These data are indicative for the condition of the scanned compost.

During scanning the substrate material needs to be illuminated by a preselected and homogenous light source. Disturbance by day light or other light sources needs to be avoided. Light sources emitting light with wavelengths between 200 - 3000 nm span the visible spectrum as well as IR, near-IR and UV sections of the spectrum and are particular suitable. LED light sources can be used to provide an accurately defined band of wavelengths. LED strips have the advantage that a very homogenous light distribution can be achieved over the whole area to be imaged.

In the present invention, spectral imaging is used to examine the quality of phase 3 compost for growing mushrooms. Exposing fungi to UV light, in particular with light having a wavelength of 280 - 400 nm, results in auto-fluorescence by the fungi which can be detected at a wavelength of 400 - 1000 nm. The spectral profile of the light emitted by the fungi is specific for a fungal species. This makes it possible to check the degree of colonization by the inoculated mycelium and/or the presence of other fungi, in particular harmful fungi, more in particular green mould. The imaging can also be used to identify contaminant or any other matter other than compost, such as stones.

During mycelium colonization of phase 3 compost the compost gradually turns whiter. This change is hardly visible by the untrained human eye but can be observed by spectral imaging due to the changing spectral data per point. When the compost turns slightly whiter, slightly more light will be reflected over the full spectrum. The difference between reflection values of colonized and non-colonized compost is particularly significant at about 600 - 650 nm, more particularly at about 630 nm. This makes it possible to examine or monitor the degree of colonization by spectral imaging at one wavelength or by multi-spectral imaging at a small bandwidth of wavelengths, e.g., 620 - 640 nm.

The compost can be imaged continuously or with regular intervals, for instance daily. The data cube can be compared with the previous data cube to monitor any developments, in particular the degree of mycelial colonization during phase 3.

Accurate set points can be used. For example, compost taken from a compost tunnel can be imaged and delivered to a farm if the set point is achieved or it can be deleted or recycled if it does not achieve the pre-defined set point. Alternatively, if the compost is colonized to a pre-defined degree and the set point is passed, the conditioning process in the tunnels can be stopped and the compost can be distributed to the farmers. Due to the accurate monitoring the degree of mycelium colonization of the compost can be certified and risks for the farmer are substantially reduced. If the set point is not passed, the compost can be rejected and discharged or recycled. It is also possible to adjust process conditions during phase 3. For instance, on basis of the observed whiteness of the compost the relative air humidity, the temperature, the CO₂ or O₂ levels or the mean residence time in the tunnel can be adjusted to promote mycelial growth.

Green mould is one of the most notorious problems that can occur with the processing of mushroom compost. Green mould becomes green and visible only after the compost leaves the composting tunnel and is exposed to daylight. Compost colonized by green mould cannot be used for growing champignon mushrooms and must be discharged. Using spectral imaging the data cubes show a slight colour shift already in a very early stage, shortly after phase 2, so it can be replaced by healthy compost and discharged. Green mould can for instance be detected by hyperspectral imaging in the UV-spectrum, e.g., at 280 - 400 nm. Other bandwidths may also be used.

Also the structure of mushroom compost can be examined. A lighter color of the compost is an indication that the structure of the compost is rougher, so the specific weight is lower. Based on this the filling heights in a composting tunnel can be adjusted.

Similarly also spawn material and/or casing material can be checked on the presence of contaminants or the degree of mycelial colonization. When a layer of casing material is applied over a bed of phase 3 compost, mycelium from the compost starts to colonize the casing layer. The degree of mycelial colonization of the casing layer can be monitored by spectral imaging at regular intervals. Environmental conditions, such as temperature or relative humidity or CO₂ content of the ambient air, can be adjusted to stimulate further growth and fruiting.

The method can for example be carried out in a device, not part of the present invention, comprising:
- a support surface for supporting a bed of substrate material;
- a light source with a scope at least partly covering the support surface;
- at least one spectral sensor with a scope at least partly overlapping the scope of the light source.

The support surface can for example be a conveyor, a compost tunnel or a farming unit at a mushroom farm. More particularly, the support surface can be a compost tunnel for processing phase 2 or phase 3 compost, e.g., by spatial scanning, using a line-scanner which is moved over at least a part of the bed of compost. Scanning a part of the bed can be sufficient, particularly if the degree of infection by mycelial colonization of the degree of green mould is to be examined. The line scanner can be moved, e.g., using a railed carriage or auxiliary frame carrying one or more scanning sensors directed to the position of the surface to be scanned. Alternatively, if the support surface is a conveyer, the conveyer can pass the compost along overlapping scopes of a light source and a spectral sensor. In a further embodiment, the scanner may for example be a handheld device.

The light source may for example comprise one or more high power LED line lights (e.g., of up to about 3.5 MLux), such as MTD-LED CP line lights supplied by MTD GmbH, Uffing, Germany. LED illumination make it possible to illuminate the compost with light of very specific wavelengths. Line lights make it possible to provide homogenous illumination along the entire length of the line-scanner. For example, if a line scanner is used, LED line lights may be positioned at opposite longitudinal sides of the line-scan camera in parallel arrangement.

Similar configurations can also be used in phase 4 and later at the mushroom growing farm.

Alternatively, the method can be carried out using a device, not part of the present invention, comprising:
- a conveyer, e.g., a belt conveyer;
- a support carrying at least one sensor directed to a section of the conveyer; and
- a light source directed to the same section of the conveyer.

The above-described aspects will hereafter be further explained with reference to the accompanying drawings showing a number of embodiments by way of example.
Figure 1: shows schematically in side view a device for processing mushroom compost;
Figure 2: shows the device of Figure 1 in front view;
Figure 3: shows schematically in side view an alternative device for processing mushroom compost;
Figure 4: shows the device of Figure 3 in front view;
Figure 5: shows a device in perspective view;
Figure 6: shows a diagram of spectral fingerprints of mycelium colonized and non-colonized compost;
Figure 7: shows a diagram representing mycelium growth over time.

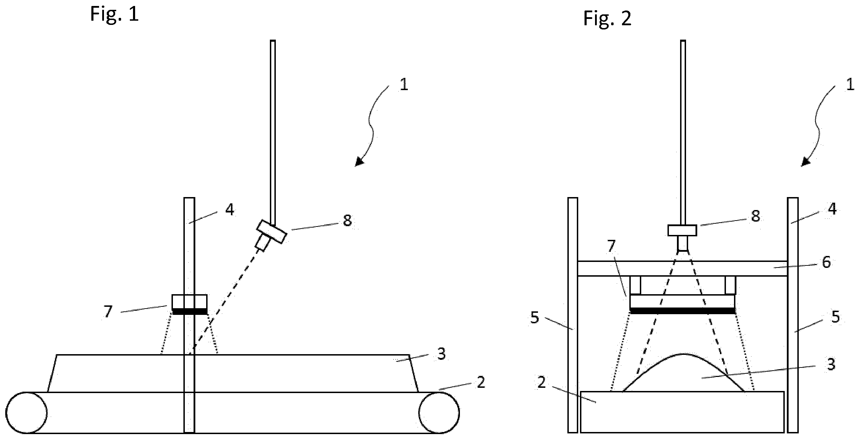

Figures 1 and 2 show a device 1 for processing substrate material for growing mushrooms, in particular mushroom compost. The device 1 comprises a conveyer 2 supporting a bed of mushroom compost 3, and a frame 4 spanning the width of the conveyer 2. As is shown in Figure 2, the frame 4 comprises a column 5 at opposite sides of the conveyer 2 and a horizontal beam 6 bridging the two columns 5. A light source 7 is mounted at a lower side of the beam 6 and is directed towards the conveyer 2 in order to illuminate a section of the bed 3 of compost.

A line-scan camera 8 is suspended, e.g., from a ceiling and is directed to the section of the bed 3 of compost that is illuminated by the light source 7.

When the conveyer 2 runs all sections of the bed 3 of compost pass the scope of the light source 7 and the line-scan camera 8. At a given position x the line-scan camera scans a line of pixels over the full width of the bed of compost and images the line at a number of wavelength ranges or bands. The line-scan camera creates data output representing spectral data over the scanned line (x,λ). By moving the conveyer, a full spectral data cube (x,y,λ) of the scanned area is obtained, with x and y being spatial dimensions and λ representing the respective band of wavelengths.

The device of Figure 1 can also be used for other substrate materials, such as saw dust substrates for shiitake. It can also be used to image batches of raw materials for the substrate to be mixed, e.g., gypsum or manure. For example, the moisture content of gypsum can be measured. If the moisture content is too low, the formulation can be adjusted, e.g., by adding extra water.

Similarly, the quality and composition of the horse manure and / or the poultry manure can be tested and the composition of the compost mixture can be adjusted accordingly.

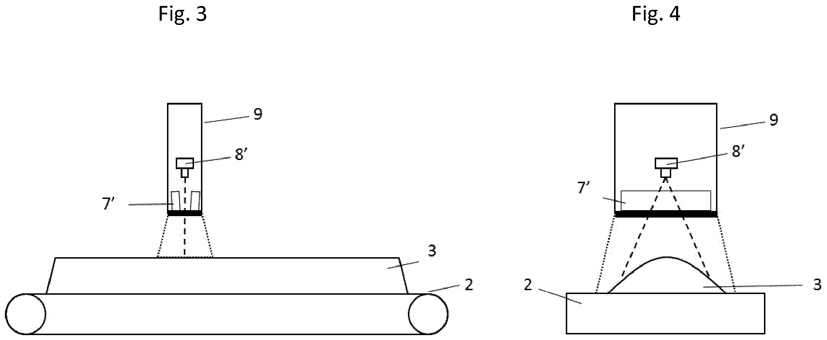

Figures 3 and 4 show a similar configuration with the light source 7' and the in-line camera 8' being integrated into a single suspension comprising a dust free housing 9 with a control panel (not shown).

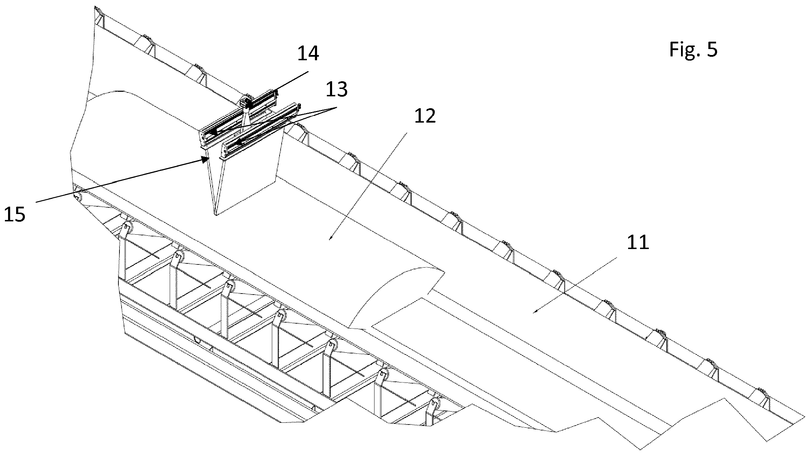

Figure 5 shows a specific embodiment with a belt conveyer 11 supporting a bed 12 of mushroom compost. A line-scan camera 14 is suspended at a distance above the bed 12 of compost. LED strips 13 are arranged at two opposite sides of the line-scan camera extending in a direction parallel to the scanning direction of the line-scan camera 14. Planar illumination rays 15 emitted by the LED strips 13 cross each other at the level of the surface to be imaged.

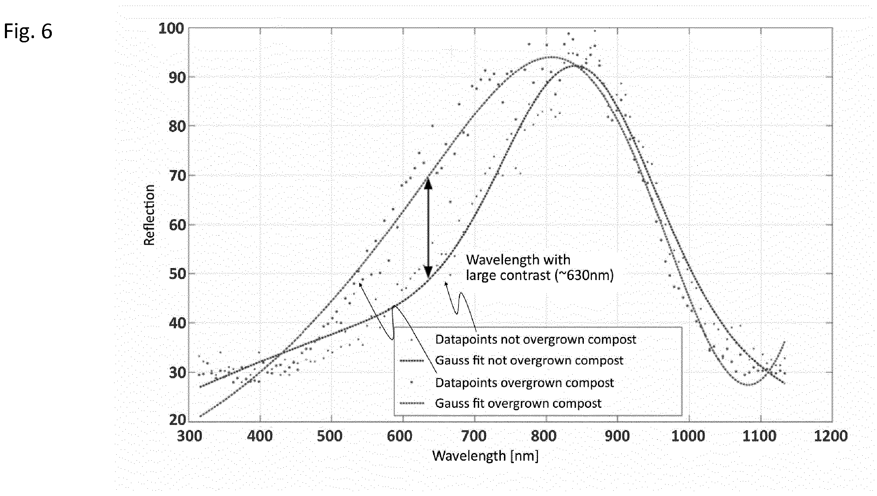

Figure 6 shows a diagram of average reflection data at a given single image, measured using a line-scan camera Basler^{®} raL2048-48gm and processed using Halcon^{®} software of Demcon Vision BV. The thicker points represent reflection by compost fully colonized by mycelium. The smaller points represent reflection by compost without any mycelium growth. Gauss fits are fitted within the data points to show interpolated reflection profiles. At some wavelengths (e.g., at about 430 nm) colonized and non-colonized compost show the same reflection. However, at about 630 nm the difference between reflection values of colonized and non-colonized compost is significant. This makes it possible to determine accurately whether or not a batch of compost is sufficiently colonized by mycelium and ready for deliverance to a farmer.

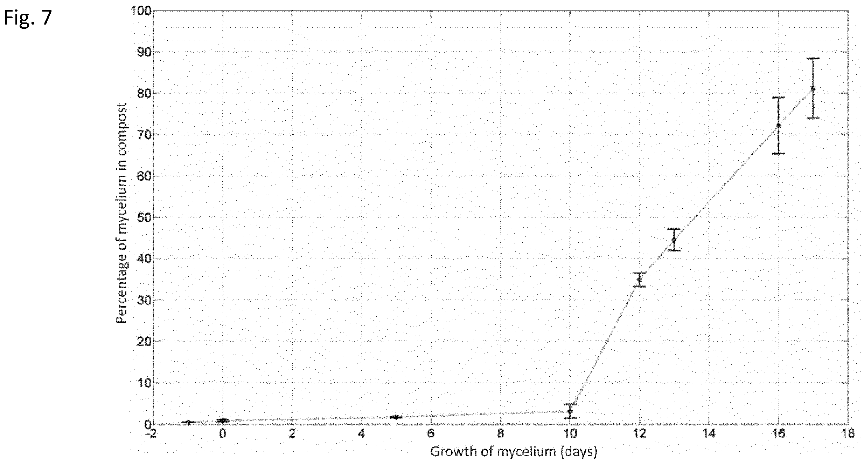

Figure 7 shows how growth of mycelium in a batch of compost can be monitored. Mycelium growth starts to speed up at the tenth day and reaches a maximum at day 16, which is the usual residence time in a compost tunnel for preparing phase 3 compost for champignon mushrooms.

## Claims

1. A method of processing mycelium colonized phase 3 mushroom compost for growing mushrooms,
wherein a surface of an amount of mycelium colonized phase 3 compost (3) is imaged to obtain imaging data and a qualitative parameter of the mycelium colonized phase 3 compost is determined on basis of the imaging data.

2. The method of claim 1, wherein the surface of the mycelium colonized phase 3 compost is imaged using spectral, e.g., multi-spectral or hyperspectral imaging technology.

3. The method of claim 1 or 2, wherein the mycelium colonized phase 3 compost is imaged at wavelengths ranging from 200 - 3000 nm.

4. The method of claim 1, 2 or 3, wherein the imaging includes imaging at subsequent bands of wavelength having an incremental width Δλ of 0,5 - 1,5 nm, e.g., about 1 nm.

5. The method of any one of the preceding claims, wherein the qualitative parameter includes the degree of mycelial colonization of the mycelium colonized phase 3 compost.

6. The method of claim 5, using spectral imaging, in particular multi-spectral imaging at a bandwidth within the range of 600 - 650 nm, e.g., at 635 nm.

7. The method of any one of the preceding claims, wherein the qualitative parameter includes the degree of colonization by green mould.

8. The method of any preceding claim, wherein the mycelium colonized phase 3 compost surface is illuminated with light having a bandwidth of 200 - 3000 nm.

## Patentansprüche

1. Ein Verfahren zur Verarbeitung von mit Mycelium besiedeltem Pilzkompost der Phase 3 für die Pilzzucht,
wobei eine Oberfläche einer Menge an mit Mycelium besiedeltem Kompost der Phase 3 (3) abgebildet wird, um Bilddaten zu erhalten, und ein qualitativer Parameter des mit Mycelium besiedelten Komposts der Phase 3 auf Basis der Bilddaten bestimmt wird.

2. Das Verfahren gemäß Anspruch 1, wobei die Oberfläche des mit Mycelium besiedelten Komposts der Phase 3 unter Verwendung von spektraler, z.B., multispektraler oder hyperspektraler Bildgebungstechnik abgebildet wird.

3. Das Verfahren gemäß Anspruch 1 oder 2, wobei der mit Mycelium besiedelte Kompost der Phase 3 bei Wellenlängen im Bereich von 200 bis 3000 nm abgebildet wird.

4. Das Verfahren gemäß Anspruch 1, 2 oder 3, wobei die Bildgebung die Abbildung in aufeinanderfolgenden Wellenlängenbändern mit einer inkrementellen Breite Δλ von 0,5 bis 1,5 nm, z. B. etwa 1 nm, umfasst.

5. Das Verfahren gemäß einem der vorhergehenden Ansprüche, wobei der qualitative Parameter den Grad der Mycelbesiedelung des mit Mycelium besiedeltem Komposts der Phase 3 beinhaltet.

6. Das Verfahren gemäß Anspruch 5 unter Verwendung von spektraler Bildgebung, insbesondere multispektraler Bildgebung bei einer Bandbreite im Bereich von 600 bis 650 nm, z.B. bei 635 nm.

7. Das Verfahren gemäß einem der vorhergehenden Ansprüche, wobei der qualitative Parameter den Grad der Besiedelung mit grünem Schimmel beinhaltet.

8. Das Verfahren gemäß einem der vorhergehenden Ansprüche, wobei die mit Mycelium besiedelte Oberfläche des Komposts der Phase 3 mit Licht mit einer Bandbreite von 200 bis 3000 nm beleuchtet wird.

## Revendications

1. Procédé de traitement de compost de champignons phase 3 colonisé par du mycélium destiné à la culture de champignons,
dans lequel une surface d'une quantité de compost phase 3 colonisé par du mycélium (3) est imagée pour obtenir des données d'image et un paramètre qualitatif du compost phase 3 colonisé par du mycélium est déterminé sur la base des données d'image.

2. Procédé selon la revendication 1, dans lequel la surface du compost phase 3 colonisé par du mycélium est imagée en utilisant une technologie d'imagerie spectrale, par exemple multispectrale ou hyperspectrale.

3. Procédé selon la revendication 1 ou 2, dans lequel le compost phase 3 colonisé par du mycélium est imagé à des longueurs d'onde comprises entre 200-3 000 nm.

4. Procédé selon la revendication 1, 2 ou 3, dans lequel l'imagerie inclut l'imagerie à des bandes de longueurs d'onde suivantes présentant une largeur incrémentale Δλ de 0,5-1-5 nm, par exemple, d'environ 1 nm.

5. Procédé selon l'une quelconque des revendications précédentes, dans lequel le paramètre qualitatif inclut le degré de colonisation par du mycélium du compost phase 3 colonisé par du mycélium.

6. Procédé selon la revendication 5, utilisant l'imagerie spectrale, en particulier l'imagerie multispectrale avec une largeur de bande comprise dans la plage de 600-650 nm, par exemple, 635 nm.

7. Procédé selon l'une quelconque des revendications précédentes, dans lequel le paramètre qualitatif inclut le degré de colonisation par la moisissure verte.

8. Procédé selon une quelconque revendication précédente, dans lequel la surface de compost phase 3 colonisé par du mycélium est éclairée avec une lumière présentant une largeur de bande de 200-3000 nm.
